(19) Europäisches Patentamt
European Patent Office
Office européen des brevets

(11) **EP 4 099 134 A1**

(12) **EUROPEAN PATENT APPLICATION**
published in accordance with Art. 153(4) EPC

(43) Date of publication:
**07.12.2022 Bulletin 2022/49**

(21) Application number: **20917093.5**

(22) Date of filing: **29.01.2020**

(51) International Patent Classification (IPC):
**G06F 3/01** $^{(2006.01)}$

(52) Cooperative Patent Classification (CPC):
**G06F 3/01**

(86) International application number:
**PCT/JP2020/003266**

(87) International publication number:
**WO 2021/152748 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEC Corporation
108-8001 Tokyo (JP)**

(72) Inventor: **SHIMIZU, Yuta
Tokyo 108-8001 (JP)**

(74) Representative: **Betten & Resch
Patent- und Rechtsanwälte PartGmbB
Maximiliansplatz 14
80333 München (DE)**

(54) **INFORMATION PROCESSING DEVICE, INFORMATION PROCESSING METHOD, AND RECORDING MEDIUM**

(57) An information processing device of this disclosure includes: a direction determination unit that determines at least one of a face orientation and a line-of-sight direction of a subject included in an image captured by a camera; and a determination unit that, based on a variation of at least one of the face orientation and the line-of-sight direction in time series, performs a determination process as to whether or not to permit the subject to operate an operation object.

FIG. 5

```
                    START
                      │
   ┌──────────────────┴──────────────────┐
   │   ACQUIRE CAPTURED IMAGE OUTSIDE VEHICLE   ├─ S101
   └──────────────────┬──────────────────┘
        NO      ◇ PERSON'S FACE DETECTED? ◇ ─── S102
   ┌─────────────────── │ YES
   │   ┌──────────────────┴──────────────────┐
   │   │          ACQUIRE FACE IMAGE          ├─ S103
   │   └──────────────────┬──────────────────┘
   │   ┌──────────────────┴──────────────────┐
   │   │      CALCULATE FACE FEATURE AMOUNT   ├─ S104
   │   └──────────────────┬──────────────────┘
   │   ┌──────────────────┴──────────────────┐
   │   │          FACE AUTHENTICATION         ├─ S105
   │   └──────────────────┬──────────────────┘
   │  NO  ◇ AUTHENTICATION SUCCESSFUL? ◇ ──── S106
   │                   │ YES
   │   ┌──────────────────┴──────────────────┐
   │   │ CALCULATE FACE ORIENTATION AND LINE-OF-SIGHT DIRECTION ├─ S107
   │   └──────────────────┬──────────────────┘
   │  NO  ◇ FACE ORIENTATION AND LINE-OF-SIGHT DIRECTION WITHIN THRESHOLD? ◇ ── S108
   │                   │ YES
   │   ┌──────────────────┴──────────────────┐
   │   │ ACCUMULATE FACE ORIENTATION AND LINE-OF-SIGHT DIRECTION PER UNIT TIME ├─ S109
   │   └──────────────────┬──────────────────┘
   │   ┌──────────────────┴──────────────────┐
   │   │ CALCULATE EACH VARIATION OF FACE ORIENTATIONS AND LINE-OF-SIGHT DIRECTIONS ├─ S110
   │   └──────────────────┬──────────────────┘
   │   ┌──────────────────┴──────────────────┐
   │   │ CALCULATE MATCHING DEGREE BETWEEN VARIATIONS OF FACE ORIENTATIONS AND LINE-OF-SIGHT DIRECTIONS ├─ S111
   │   └──────────────────┬──────────────────┘
   │  NO  ◇ MATCHING DEGREE WITHIN THRESHOLD? ◇ ── S112
   │                   │ YES
   │   ┌──────────────────┴──────────────────┐
   │   │           OPERATE VEHICLE            ├─ S113
   │   └──────────────────┬──────────────────┘
   └──────────────────── END
```

EP 4 099 134 A1

**Description**

[Technical Field]

This disclosure relates to an information processing device, an information processing method, and a storage medium.

[Background Art]

Patent Literature 1 discloses a monitoring device that determines an action or a state of a driver based on a relationship between each of various objects included in the driver's field of view and the driver's face orientation or line-of-sight direction and causes an in-vehicle system to perform a control process in accordance with a result of the determination. Such a monitoring device determines that the driver is closely watching an object when the driver's face orientation or line-of-sight direction is within a predetermined range from the object, for example.

[Citation List]

[Patent Literature]

PTL 1: International Publication No. 2007/105792

[Technical Problem]

The monitoring device illustrated as an example in Patent Literature 1 directly uses a determined value of a determined face orientation or line-of-sight direction in order to determine whether or not the driver is closely watching an object. However, there is an individual difference in determined values of face orientations and line-of-sight directions. In such a case, the determination accuracy may be reduced.

Accordingly, this disclosure intends to provide an information processing device, an information processing method, and a storage medium that can solve the problem described above.

[Solution to Problem]

According to one example aspect of this disclosure, provided is an information processing device including: a direction determination unit that determines at least one of a face orientation and a line-of-sight direction of a subject included in an image captured by a camera; and a determination unit that, based on a variation of at least one of the face orientation and the line-of-sight direction in time series, performs a determination process as to whether or not to permit the subject to operate an operation object.

According to another example aspect of this disclosure, provided is an information processing method including: determining at least one of a face orientation and a line-of-sight direction of a subject included in an image captured by a camera; and based on a variation of at least one of the face orientation and the line-of-sight direction in time series, performing a determination process as to whether or not to permit the subject to operate an operation object.

According to yet another example aspect of this disclosure, provided is a storage medium storing a program that causes a computer to perform: determining at least one of a face orientation and a line-of-sight direction of a subject included in an image captured by a camera; and based on a variation of at least one of the face orientation and the line-of-sight direction in time series, performing a determination process as to whether or not to permit the subject to operate an operation object.

[Brief Description of Drawings]

[Fig. 1]

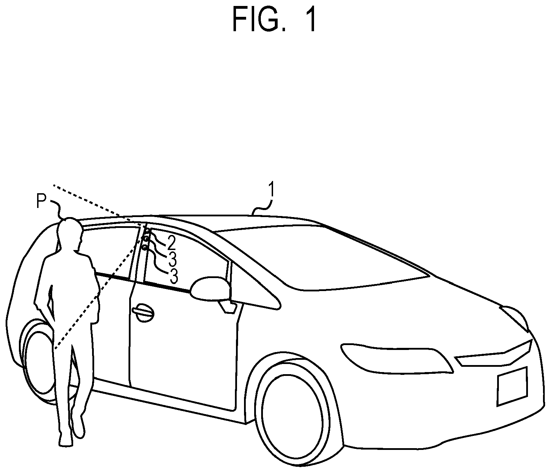

Fig. 1 is an external view illustrating an example of vehicle structure in a first example embodiment.
[Fig. 2]

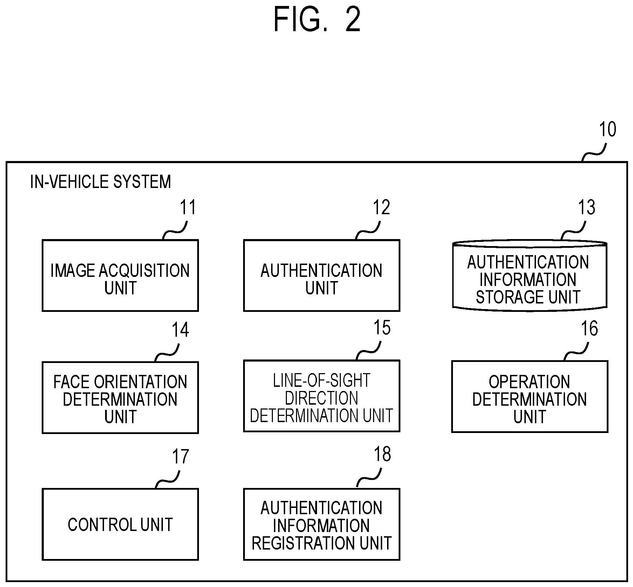

Fig. 2 is a function block diagram illustrating an example of functions of an in-vehicle system in the first example embodiment.
[Fig. 3]

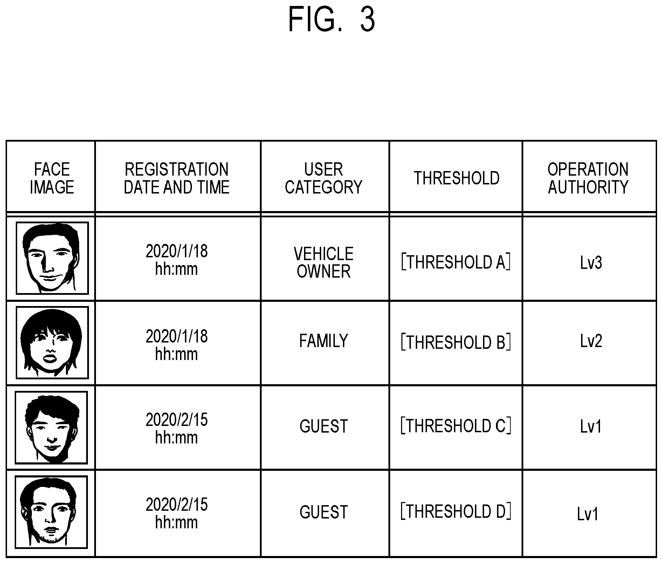

Fig. 3 is a diagram illustrating an example of information stored in an authentication information storage unit in the first example embodiment.

[Fig. 4]

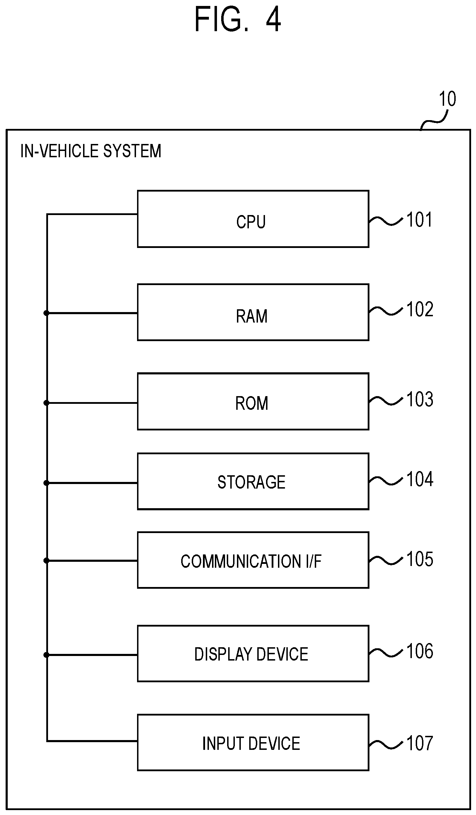

Fig. 4 is a block diagram illustrating an example of a hardware configuration of the in-vehicle system in the first example embodiment.
[Fig. 5]

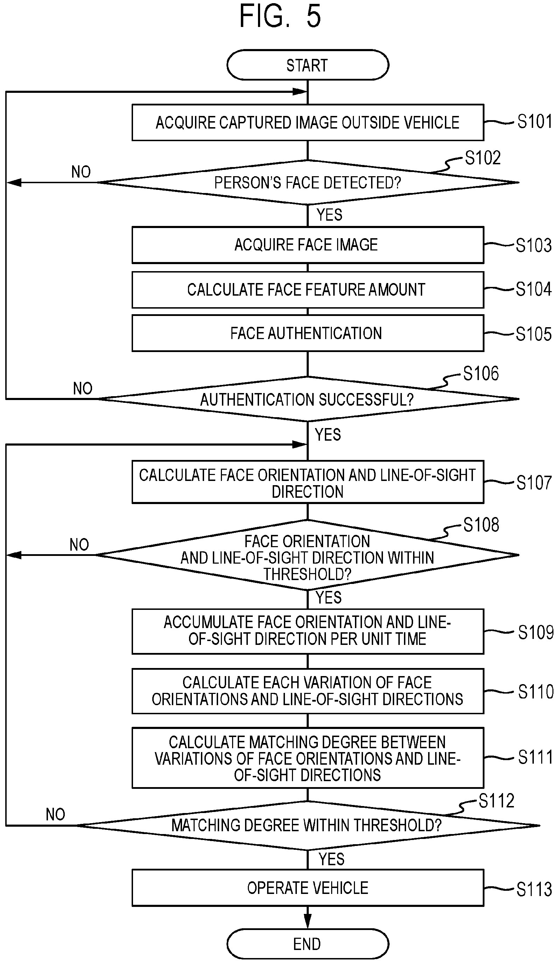

Fig. 5 is a flowchart illustrating an example of a process of the in-vehicle system in the first example embodiment.
[Fig. 6]

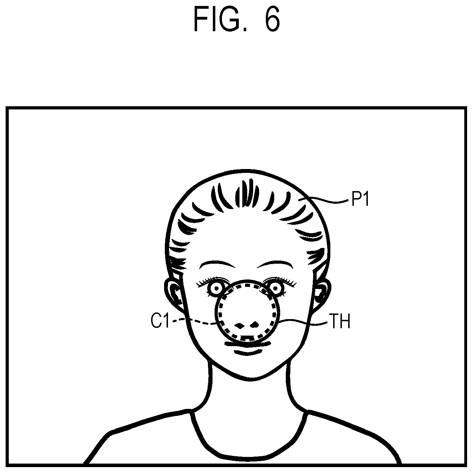

Fig. 6 is a diagram illustrating a method of determining the subject's intention of operation in the first example embodiment.
[Fig. 7]

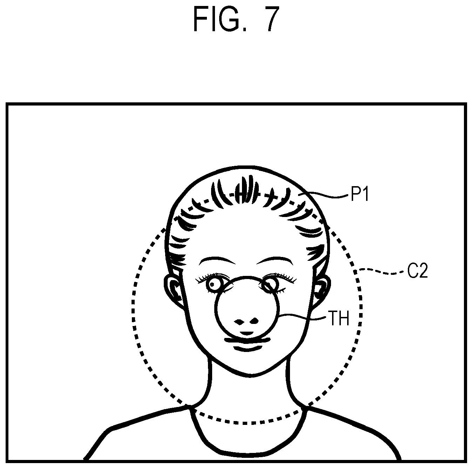

Fig. 7 is a diagram illustrating a method of determining the subject's intention of operation in the first example embodiment.
[Fig. 8]

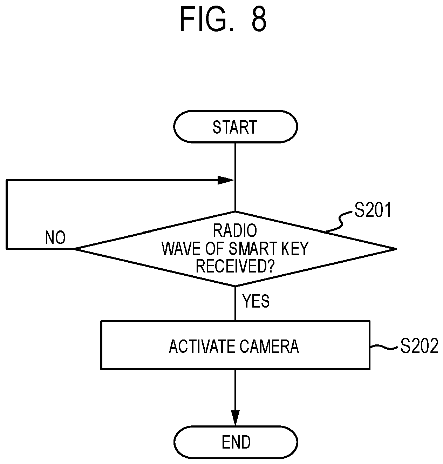

Fig. 8 is a flowchart illustrating an example of a process of an in-vehicle system in a second example embodiment.
[Fig. 9]

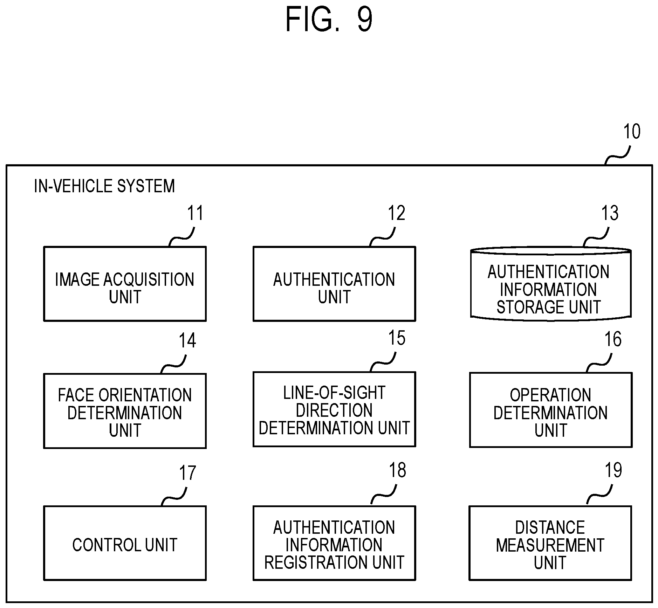

Fig. 9 is a function block diagram illustrating an example of functions of an in-vehicle system in a third example embodiment.
[Fig. 10]

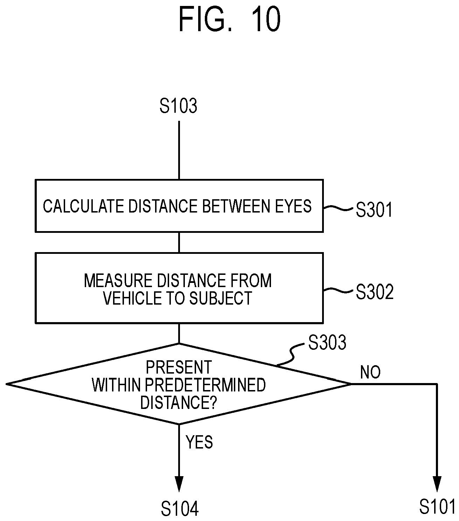

Fig. 10 is a flowchart illustrating an example of a process of the in-vehicle system in the third example embodiment.
[Fig. 11]

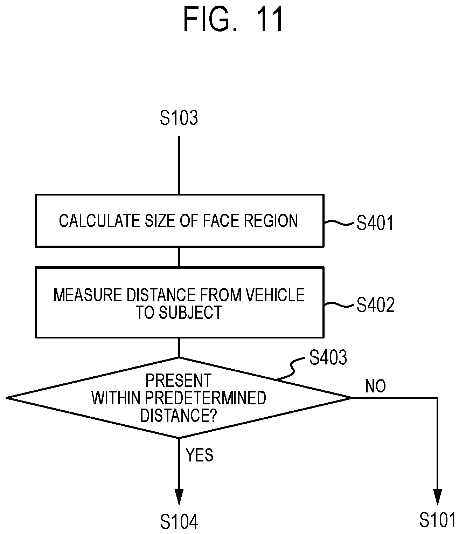

Fig. 11 is a flowchart illustrating an example of a process of an in-vehicle system in a fourth example embodiment.
[Fig. 12]

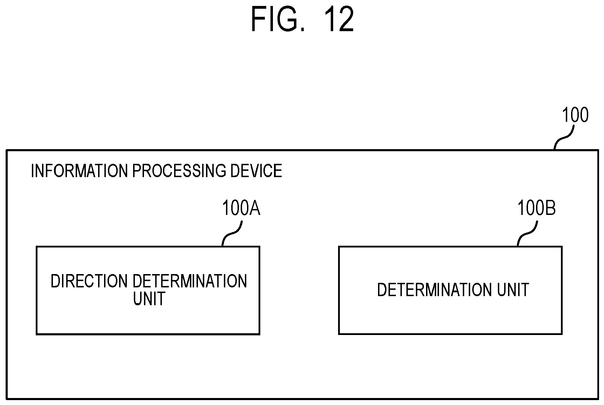

Fig. 12 is a block diagram illustrating a configuration of an information processing device in a fifth example embodiment.
[Fig. 13]

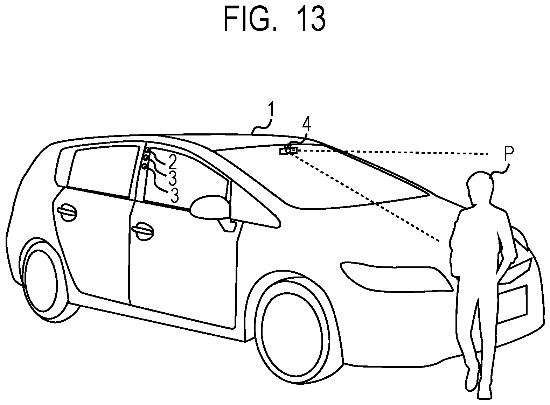

Fig. 13 is an external view illustrating an example of vehicle structure in a modified example embodiment.

[Description of Embodiments]

Exemplary example embodiments of this disclosure will be described below with reference to the drawings. Throughout the drawings, the same elements or corresponding elements are labeled with the same references, and the description thereof may be omitted or simplified.

[First Example Embodiment]

Fig. 1 is an external view illustrating an example of the vehicle structure in the present example embodiment. In Fig. 1, a camera 2 and LEDs 3 are arranged vertically on the right side of a body of a vehicle 1. Note that the camera 2 and the LEDs 3 are provided also on the left side in the same manner (not illustrated). Any number of cameras 2 and LEDs 3 may be installed.

The camera 2 is a digital camera or the like having a charge coupled device (CCD) image sensor or a complementary metal oxide semiconductor (CMOS) image sensor, for example. The camera 2 is connected to an in-vehicle system 10 described later via a communication cable (not illustrated) and outputs a captured image captured by itself to the in-vehicle system 10. The type of the camera 2 may be selected as appropriate in accordance with a capturing object, a capturing time, and a use environment.

Each LED 3 is a light emitting device that indicates the execution status of a process or a result of a process in the in-vehicle system 10 through turning on or off of light emission or the color thereof.

Fig. 2 is a function block diagram illustrating an example of functions of the in-vehicle system 10 in the present example embodiment. The in-vehicle system 10 is a control unit including an Engine Control Unit (ECU) and a plurality of controllers that control various instruments in the vehicle 1 in cooperation with the ECU. Components that implement the functions of the in-vehicle system 10 may not be directly provided on the vehicle 1. Specifically, the functions of the in-vehicle system 10 may be implemented in a server on a network. In such a case, the cameras 2 and the LEDs 3 of the vehicle 1 are always connected to the server on the network via a wireless communication network.

As illustrated in Fig. 2, the in-vehicle system 10 includes an image acquisition unit 11, an authentication unit 12, an authentication information storage unit 13, a face orientation determination unit 14, a line-of-sight direction determination unit 15, an operation determination unit 16, a control unit 17, and an authentication information registration unit 18.

The image acquisition unit 11 acquires a captured image captured by the camera 2 provided to the vehicle 1. The image acquisition unit 11 analyzes a captured image and detects a face image of a person included in a captured image. Such a person will be a subject of an authentication process and a determination process described later and thus is hereafter referred to as a "subject". In the case of Fig. 1, a person P is a subject.

The authentication unit 12 performs an authentication process on a subject through face matching between a subject's face image acquired from a captured image and one or more registrants' registered face images.

The authentication information storage unit 13 stores authentication information on a registrant who is authorized to operate the vehicle 1. The authentication information is registered by the authentication information registration unit 18 described later based on an input operation performed by a user.

Fig. 3 is a diagram illustrating an example of information stored in the authentication information storage unit 13 in the present example embodiment. In this example, as data items of authentication information, the registrant's face image, the registration date and time, the user category, the threshold, and the operation authority are listed. The registration date and time is a date and time when authentication information is registered. The user category is information to categorize users.

In Fig. 3, as specific examples for the user category, three of "vehicle owner", "family", and "guest" are listed. The threshold is a value used in a determination process to determine whether or not to permit a subject to operate the vehicle 1. The threshold used in the determination process in the present example embodiment is set in advance in accordance with a subject. The operation authority indicates a level of authority according to which the user is allowed to operate the vehicle 1. Details of the threshold will be described later with reference to Fig. 6 and Fig. 7.

The face orientation determination unit 14 determines the face orientation of a subject included in a captured image acquired by the image acquisition unit 11. On the other hand, the line-of-sight direction determination unit 15 determines a line-of-sight direction of a subject included in a captured image acquired by the image acquisition unit 11. Although separately provided as respective units in the present example embodiment, the face orientation determination unit 14 and the line-of-sight direction determination unit 15 may be integrated into one unit (a direction determination unit 100A of a fifth example embodiment described later).

In the present example embodiment, the "face orientation" is defined as an angle of a face front direction relative to an optical axis assuming that the axis direction of the optical axis of the camera 2 is 0 degree. Similarly, the "line-of-sight direction" is defined as an angle of the optical axis direction of a subject's eyeball relative to the optical axis direction of the camera 2. Note that the line-of-sight direction can also be determined based on the face orientation and the positional relationship of irises in the face. The face orientation and the line-of-sight direction may be calculated by a known algorithm.

The operation determination unit 16 performs a determination process based on the matching degree between a variation related to face orientations (hereafter, referred to as a "first variation") and a variation related to line-of-sight directions (hereafter, referred to as a "second variation"). Specifically, the operation determination unit 16 outputs a determination result to permit operation of the vehicle 1 if a difference between the first variation and the second variation occurring within a predetermined period is less than or equal to a threshold set in advance.

Specific examples of a calculation method of a matching degree between variations performed by the operation determination unit 16 will be described below. Note that any calculation method may be employed as long as the matching degree between the first variation related to face orientations and the second variation related to line-of-sight directions can be calculated, and the calculation method is not limited to only the following methods A and B.

First, the method A to find a variation of time-series data by using a standard deviation will be described. The procedure of the method A is as follows.

[Method A]

A1: calculating standard deviations for respective time-series data on face orientations and line-of-sight directions.
A2: calculating a difference between both standard deviations (the first variation and the second variation) calculated in A1.
A3: comparing the difference between the first variation and the second variation calculated in A2 with a threshold set in advance.
A4: if the difference is less than or equal to the threshold, performing operation of the vehicle 1.

Further, the operation determination unit 16 may be configured to output a determination result to permit operation of the vehicle 1 if the correlation between face orientations and line-of-sight directions occurring within a predetermined period is greater than or equal to a threshold set in advance. The procedure of the method B is as follows.

[Method B]

B1: calculating a standard deviation for respective time-series data on face orientations and line-of-sight directions.

B2: finding standard deviations and mean values for the face orientations and the line-of-sight directions and calculating covariances for the face orientations and the line-of-sight directions.

B3: calculating a correlation coefficient from the standard deviations and the covariances calculated in B1 and B2 and comparing the calculated correlation coefficient with a threshold set in advance.

B4: if the correlation coefficient is greater than or equal to a threshold, performing operation of the vehicle 1.

For example, the determination accuracy for face orientations and line-of-sight directions may change in accordance with environmental conditions such as the brightness of sunlight depending on time or weather, whether or not there is illumination light such as light from a street light, or whether the subject is in a shade or in the sun. However, the tendencies of changes in both the standard deviations (the first variation and the second variation) are considered to be similar. That is, when one increases (decreases), the other also increases (decreases). Thus, even in the environmental condition described above, the difference between the first variation and the second variation is maintained constant within a certain range. Similarly, the correlation between the face orientation and the line-of-sight direction is also maintained constant within a certain range. Therefore, as long as the threshold is suitable, the operation determination unit 16 can suitably determine whether or not the subject has an intention of operation regardless of a change in the determination accuracy for the face orientation and the line-of-sight direction due to the environmental conditions described above.

The control unit 17 controls the vehicle 1 based on an authentication result from the authentication unit 12 and a determination result from the operation determination unit 16. In the present example embodiment, the control unit 17 controls the lock state of a door apparatus provided to the vehicle 1. However, the detail of control of the vehicle 1 performed by the control unit 17 is not particularly limited. The control unit 17 may turn on a light of the vehicle 1. Alternatively, the control unit 17 may start the engine of the vehicle 1 or may cause the vehicle 1 to autonomously travel to a position near the subject. Furthermore, the control unit 17 also controls the light emission state (for example, the color or a blinking or flashing pattern) of the LEDs (light emitting device) 3 provided to the vehicle 1 based on the execution status or a determination result of a determination process. This is to notify the subject of the progress of a determination process. A specific example for control of the LEDs 3 will be described later.

The authentication information registration unit 18 registers, to the authentication information storage unit 13, authentication information input from the user such as a vehicle owner. Authentication information may be registered at various timings. For example, authentication information can be registered by the user capturing a face image when performing a purchase procedure at a dealer shop of the vehicle 1. At this time, it is preferable to automatically calculate a threshold on a user basis based on a time-series registration image captured in a state where the user looks straight. Note that the registration process for authentication information may be performed by an authenticated person at any timing from the in-vehicle system 10.

For example, the user may use a camera of a terminal such as a smartphone or a tablet to capture a face image and use an application installed in the terminal to generate authentication information. In such a case, authentication information input to the application is transmitted to the in-vehicle system 10 via a mobile network or the like. Alternatively, the user may use the camera 2 mounted on the vehicle 1 to capture a face image. In such a case, authentication information is generated and registered based on face image data transmitted from the camera 2 to the in-vehicle system 10.

Fig. 4 is a block diagram illustrating an example of a hardware configuration of the in-vehicle system 10 in the present example embodiment. As illustrated in Fig. 4, the in-vehicle system 10 includes a central processing unit (CPU) 101, a random access memory (RAM) 102, a read only memory (ROM) 103, a storage 104, a communication interface (I/F) 105, a display device 106, and an input device 107, as a computer that performs calculation, control, and storage. Respective devices are connected to each other via a bus, a wiring, a drive device, or the like.

The CPU 101 is a processor having functions of performing a predetermined operation in accordance with a program stored in the ROM 103 or the storage 104 and controlling each component of the in-vehicle system 10. The RAM 102 is formed of a volatile storage medium and provides a temporary memory region required for the operation of the CPU 101.

The ROM 103 is formed of a nonvolatile storage medium and stores information required for a program or the like used in the operation of the in-vehicle system 10. The storage 104 is formed of a nonvolatile storage medium and stores a program or data used for operating the in-vehicle system 10. The storage 104 is formed of a hard disk drive (HDD) or a solid state drive (SSD), for example.

The communication I/F 105 is a communication interface based on a specification such as Ethernet (registered trademark), Wi-Fi (registered trademark), 4G, or the like and is a module used for communication with another device.

The display device 106 is a liquid crystal display, an organic light emitting diode (OLED) display, or the like for displaying a moving image, a static image, a text, or the like and is used for presenting information to the user.

The input device 107 is a keyboard, a pointing device, a button, or the like and accepts a user operation. The display device 106 and the input device 107 may be integrally formed as a touch panel.

Note that the hardware configuration illustrated in Fig. 4 is an example, a device other than those illustrated may be added, or some of the devices may not be provided. Further, some of the devices may be replaced with another device having a similar function. Further, some of the functions of the present example embodiment may be provided from another device via a network, or the functions of the present example embodiment may be implemented distributed to a plurality of devices. In such a way, the hardware configuration illustrated in Fig. 4 can be suitably modified.

The operation of the in-vehicle system 10 in the present example embodiment will be described below with reference to Fig. 5 to Fig. 7. Note that it is assumed that the subject is notified of an operating method such as "Stare at the camera for X seconds before operating the vehicle" in advance.

Fig. 5 is a flowchart illustrating an example of the process of the in-vehicle system 10 in the present example embodiment. This process is repeatedly performed during a capturing process performed by the camera 2.

In step S101, the in-vehicle system 10 (the image acquisition unit 11) acquires a captured image of outside of the vehicle 1 captured by the camera 2.

In step S102, the in-vehicle system 10 (the image acquisition unit 11) analyzes the captured image and determines whether or not a face of a person is detected in the captured image. Herein, if the in-vehicle system 10 determines that a face of a person is detected in the captured image (step S102: YES), the process proceeds to step S103.

In contrast, if the in-vehicle system 10 (the image acquisition unit 11) determines that no face of a person is detected in the captured image (step S102: NO), the process returns to step S101.

In step S103, the in-vehicle system 10 (the image acquisition unit 11) acquires a face image of a person from inside of the captured image. Next, the in-vehicle system 10 (the authentication unit 12) calculates a face feature amount from the face image (step S104) and then performs face authentication by referencing the authentication information storage unit 13 based on the face feature amount (step S105). The process then proceeds to step S106.

In step S106, the in-vehicle system 10 (the authentication unit 12) determines whether or not the authentication of the subject is successful. Herein, if the in-vehicle system 10 determines that the authentication of the subject is successful (step S106: YES), the process proceeds to step S107.

In contrast, if the in-vehicle system 10 (the authentication unit 12) determines that the authentication of the subject failed (step S106: NO), the process returns to step S101.

In step S107, the in-vehicle system 10 (the face orientation determination unit 14 and the line-of-sight direction determination unit 15) calculates the face orientation and the line-of-sight direction of the subject. At this time, the control unit 17 turns the LEDs 3 to a first light emission state. The first light emission state indicates that determination on the intention of operation is on-going.

In step S108, the in-vehicle system 10 (the operation determination unit 16) determines whether or not the face orientation and the line-of-sight direction are within a threshold. Herein, if the in-vehicle system 10 (the operation determination unit 16) determines that the face orientation and the line-of-sight direction are within the threshold (step S108: YES), the process proceeds to step S109.

In contrast, if the in-vehicle system 10 (the operation determination unit 16) determines that the face orientation and the line-of-sight direction are out of the threshold (step S108: NO), the process returns to step S107, and the process on the authenticated subject is repeated. As a result of the process of step S108, a person looking away is excluded from the subject to be processed.

In step S109, the in-vehicle system 10 (the operation determination unit 16) accumulates face orientations and line-of-sight directions per unit time.

In step S110, the in-vehicle system 10 (the operation determination unit 16) calculates the variation of the face orientations and the variation of the line-of-sight directions.

In step S111, the in-vehicle system 10 (the operation determination unit 16) calculates a matching degree between the variation of the face orientations and the variation of the line-of-sight directions.

In step S112, the in-vehicle system 10 (the operation determination unit 16) determines whether or not the matching degree is within a threshold. Note that the threshold in step S112 differs from the threshold in step S108 described above. The threshold in step S108 is a value used for determining whether or not a face orientation and a line-of-sight direction fall in a certain range, respectively. Further, the threshold in step S108 is set in advance for each of a face orientation and a line-of-sight direction. On the other hand, the threshold in step S112 is a value used for determining whether or not a matching degree between the variation of face orientations and the variation of line-of-sight directions falls in a certain range. Each threshold is set in advance in accordance with a subject.

Herein, if the in-vehicle system 10 (the operation determination unit 16) determines that the matching degree is within the threshold (step S112: YES), the process proceeds to step S113. That is, if the matching degree between a variation of the face orientation and a variation the line-of-sight direction in time series is within the threshold, the in-vehicle system 10 deems that the subject has an intention of operating the vehicle 1. In such a case, the control unit 17 turns the LEDs 3 to a second light emission state. The second light emission state indicates that determination as to an intention of operation is successful.

In contrast, if the in-vehicle system 10 (the operation determination unit 16) determines that the matching degree is out of the threshold (step S112: NO), the process returns to step S107. That is, the in-vehicle system 10 deems that the subject has no intention of operating the vehicle 1. In such a case, the control unit 17 turns the LEDs 3 to a third light emission state. The third light emission state indicates that determination as to an intention of operation failed.

Fig. 6 and Fig. 7 are diagrams illustrating a method of determining a subject's intention of operation in the present example embodiment. Fig. 6 illustrates s a case of permitting the subject to operate the vehicle 1. Fig. 7 illustrates a case of not permitting the subject to operate the vehicle 1. The solid-line circles TH in Fig. 6 and Fig. 7 indicate the threshold used for determining the matching degree of variations.

Herein, a case where face orientations and line-of-sight directions are determined in a pan direction and a tilt direction as time-series data, respectively, from images acquired at a predetermined sampling cycle is described.

The time-series data of a face orientation in the pan direction, a line-of-sight direction in the pan direction, a face orientation in the tilt direction, and a line-of-sight direction in the tilt direction are expressed as follows, respectively. The value N (N ≥ 1) denotes a frame number of a captured image.

$$\text{Face orientation in the pan direction} = \{\theta_F(1), \theta_F(2), \ldots, \theta_F(N)\}$$

$$\text{Line-of-sight direction in the pan direction} = \{\theta_E(1), \theta_E(2), \ldots, \theta_E(N)\}$$

$$\text{Face orientation in the tilt direction} = \{\Phi_F(1), \Phi_F(2), \ldots, \Phi_F(N)\}$$

$$\text{Line-of-sight direction in the tilt direction} = \{\Phi_E(1), \Phi_E(2), \ldots, \Phi_E(N)\}$$

For example, when the frame rate of a captured image (video) is 3 frames/second, for example, and the unit time of processing in the operation determination unit 16 is 3 seconds, time-series data of face orientations and line-of-sight directions are acquired from captured images for 90 frames in total, respectively. That is, N is 90.

Next, when the standard deviations calculated for respective time-series data are denoted as SFP, SEP, SFT, and $S_{ET}$, respectively, differences D1 and D2 between standard deviations of respective angles in the pan direction and the tilt direction are calculated as follows.

$$D1 = S_{FP} - S_{EP}$$

$$D2 = S_{FT} - S_{ET}$$

The mean square of the above values is expressed by Sqrt $(D_1{}^2 + D_2{}^2)$. The circle C1 illustrated by the dashed line in Fig. 6 corresponds to a circle whose radius is the mean square value. On the other hand, the circle TH in Fig. 6 corresponds to a circle whose radius is a mean square value calculated by the calculation method described above when the subject looks straight at the camera 2.

In Fig. 6, the circle C1 is located inside the circle TH. In such a case, it is determined that the subject P1 is looking straight at the camera 2, that is, the subject has an intention of operating the vehicle 1.

On the other hand, Fig. 7 illustrates a state of the subject P1 where, while the face orientation is the front direction with respect to the camera 2, the line-of-sight direction is out of the front direction. In such a case, if a mean square is calculated by the calculation method described above, the value thereof is represented as the circle C2 illustrated by the dashed line in Fig. 7. In such a case, it is determined that the subject P1 is not looking straight at the camera 2, that is, the subject has no intention of operating the vehicle 1.

In step S113, the in-vehicle system 10 (the control unit 17) outputs control information to a device to be operated and operates the vehicle 1. For example, the in-vehicle system 10 (the control unit 17) controls a door apparatus of the vehicle 1 into an unlocked state.

According to the present example embodiment, even when the subject's (passenger's) hands are full such as when holding luggage or a child, it is possible to perform a vehicle operation such as unlocking of a door. Thus, ease of use for the subject can be significantly improved.

Further, the configuration is such that information or operation required for authentication is not displayed on the display device 106 of the vehicle 1. This can ensure security.

Since the configuration is easily implemented by providing the camera 2 facing outward to the vehicle 1 and connecting the camera 2 to the in-vehicle system 10, there are advantages of low introduction cost and easy implementation.

Instead of determination values of face orientations or line-of-sight directions being directly used, a variation of face orientations and a variation of line-of-sight directions in time series are calculated, respectively. Further, a calculated matching degree between the variation of face orientations (the first variation) and the variation of line-of-sight directions (the second variation) is compared with a threshold set in advance on a subject basis, and this achieves an advantageous effect that robustness is obtained against individual differences in determination values.

Further, it is conceivable that the subject may look at the vehicle by its line-of-sight while turning its face toward another person when the subject approaches the vehicle while talking with another person. However, if the face orientation and the line-of-sight direction do not change from respective orientation and direction within a unit time, the difference thereof will be substantially the same value as that when the subject is looking straight at the camera 2. Accordingly, it is determined that the subject has an intention of operating the vehicle 1.

Furthermore, as one modified example, in step S108 of Fig. 5, the in-vehicle system 10 (the operation determination unit 16) may be configured to determine whether or not the line-of-sight direction is within a threshold related to a line-of-sight direction. That is, when a threshold as to whether or not to perform the subsequent determination process (for example, steps S109 to S112) is provided based on a line-of-sight direction separately from the threshold compared with a matching degree (see step S112), the subsequent determination process is not performed unless the line-of-sight is directed to the vehicle, and this can realize improvement in ease of use and a reduction of erroneous determination. Similarly, the in-vehicle system 10 (the operation determination unit 16) may be configured to determine whether or not the face orientation is within a threshold related to a face orientation. In such a case, only the threshold for the face orientation can be separately set.

Furthermore, since the configuration is such that the determination is made from a matching degree between both variations (the variation of face orientations and the variation of line-of-sight directions), robust authentication can be performed even when a lighting environment varies during authentication. As a result, improvement of authentication accuracy in an environment outside a vehicle interior (outdoor) is expected.

[Second Example Embodiment]

The present example embodiment differs from the first example embodiment in that the in-vehicle system 10 (the control unit 17) starts a capturing process with the camera 2 based on a signal from a transmitter carried by the subject. Note that, in the present example embodiment, no positive operation on the transmitter (for example, a smart key) from the subject is required.

Fig. 8 is a flowchart illustrating an example of the process of the in-vehicle system 10 in the present example embodiment. This process is performed before the process illustrated in Fig. 5 is started when the vehicle 1 stops the engine and is parked, for example.

In step S201, the in-vehicle system 10 (the control unit 17) determines whether or not a radio wave from a transmitter carried by a subject is received. Herein, if the in-vehicle system 10 determines that a radio wave from a transmitter is received (step S201: YES), the process proceeds to step S202. In contrast, if the in-vehicle system 10 determines that no radio wave from a transmitter is received (step S201: NO), the process of step S201 is repeated.

In step S202, the in-vehicle system 10 (the control unit 17) activates the camera 2 to start a capturing process. In response to completion of the process of Fig. 8, the process illustrated in Fig. 5 is then started.

According to the present example embodiment, it is possible to detect a subject approaching the vehicle 1 by receiving a signal (radio wave) from a transmitter carried by the subject. Accordingly, the in-vehicle system 10 can perform a capturing process with the camera 2 at a suitable timing. Further, in a state where the engine stops, the power consumption by the in-vehicle system 10 can be suppressed to the minimum.

[Third Example Embodiment]

Fig. 9 is a function block diagram illustrating an example of functions of the in-vehicle system 10 in the present example embodiment. As illustrated in Fig. 9, the in-vehicle system 10 of the present example embodiment further includes a distance measurement unit 19, which makes a difference from the example embodiments described above. The distance measurement unit 19 measures the distance from the vehicle 1 to a subject based on a captured image captured by the camera 2. In response thereto, the authentication unit 12 performs a determination process on the subject present at a position where the distance measured by the distance measurement unit 19 is less than or equal to a predetermined distance.

Fig. 10 is a flowchart illustrating an example of the process of the in-vehicle system 10 in the present example embodiment. This process may be performed between step S103 and step S104 illustrated in Fig. 5.

In step S301, the in-vehicle system 10 (the distance measurement unit 19) calculates the distance between eyes of a person from a face image. The distance between eyes is the distance between the center points of both eyes. The distance between eyes is longer when the person is closer to the camera 2 and shorter when the person is farther from the camera 2.

In step S302, the in-vehicle system 10 (the distance measurement unit 19) measures the distance from the vehicle 1 to the subject based on the calculated distance between eyes.

In step S303, the in-vehicle system 10 (the operation determination unit 16) determines whether or not the subject is present within a predetermined distance from the vehicle 1 based on the measured distance. Herein, if the in-vehicle system 10 (the operation determination unit 16) determines that the subject is present within the predetermined distance from the vehicle 1 (step S303: YES), the process proceeds to step S104 illustrated in Fig. 5.

In contrast, if the in-vehicle system 10 (the operation determination unit 16) determines that the subject is not present within the predetermined distance from the vehicle 1 (step S303: NO), the process proceeds to step S101 illustrated in Fig. 5.

According to the present example embodiment, the determination process is performed on only the subject present at the measured distance less than or equal to a predetermined distance. It is therefore possible to suitably narrow down the number of subjects to be subjected to the determination process. As a result, the in-vehicle system 10 (the control unit 17) can perform control such as an unlocking operation of a door at a suitable timing when the subject is present near the vehicle 1.

Note that, in one modified example, the distance measurement unit 19 of the in-vehicle system 10 may determine the distance from a subject to the vehicle 1 based on the intensity of a radio wave received from a transmitter carried by the subject (see the previous second example embodiment).

[Fourth Example Embodiment]

The present example embodiment differs from the third example embodiment described above in that the distance measurement unit 19 measures the distance from the vehicle 1 to a subject based on the size of a subject's face or head region in an image.

Fig. 11 is a flowchart illustrating an example of the process of the in-vehicle system 10 in the present example embodiment. This process may be performed between step S103 and step S104 illustrated in Fig. 5 as with the case of Fig. 10.

In step S401, the in-vehicle system 10 (the distance measurement unit 19) calculates the size of a person's face region in a face image. The calculated size of a face region is larger when the person is closer to the camera 2 and smaller when the person is farther from the camera 2. Note that the size of a head instead of the size of a face region may be calculated.

In step S402, the in-vehicle system 10 (the distance measurement unit 19) measures the distance from the vehicle 1 to the subject based on the calculated size of the face region.

In step S403, the in-vehicle system 10 (the operation determination unit 16) determines whether or not the subject is present within a predetermined distance from the vehicle 1 based on the measured distance. Herein, if the in-vehicle system 10 (the operation determination unit 16) determines that the subject is present within the predetermined distance from the vehicle 1 (step S403: YES), the process proceeds to step S104 illustrated in Fig. 5.

In contrast, if the in-vehicle system 10 (the operation determination unit 16) determines that the subject is not present within the predetermined distance from the vehicle 1 (step S403: NO), the process proceeds to step S101 illustrated in Fig. 5.

According to the present example embodiment, the determination process is performed on only the subject present at the measured distance less than or equal to a predetermined distance. It is therefore possible to suitably narrow down the number of subjects to be subjected to the determination process. As a result, the in-vehicle system 10 (the control unit 17) can perform control such as an unlocking operation of a door at a suitable timing when the subject is present near the vehicle 1.

[Fifth Example Embodiment]

Fig. 12 is a block diagram illustrating a configuration of an information processing device 100 in the present example embodiment. As illustrated in Fig. 12, the information processing device 100 has a direction determination unit 100A and a determination unit 100B. The direction determination unit 100A determines at least one of a face orientation and a line-of-sight direction of a subject included in an image captured by a camera. The determination unit 100B performs a determination process as to whether or not to permit the subject to operate an operation object based on a variation of at least one of the face orientation and the line-of-sight direction in time series. According to the present example embodiment, it is possible to accurately determine whether or not to permit a subject to operate an operation object.

[Modified Example Embodiment]

Although this disclosure has been described above with reference to the example embodiments, this disclosure is not limited to the example embodiments described above. Various modifications that may be understood by those skilled in the art can be made to the configuration and the details of this disclosure within the scope not departing from the spirit of this disclosure. For example, it should be understood that an example embodiment in which a configuration of a part of any of the example embodiments is added to another example embodiment or an example embodiment in which a configuration of a part of any of the example embodiments is replaced with a configuration of a part of another example embodiment is also an example embodiment to which this disclosure may be applied.

In the above example embodiments, the case where the operation determination unit 16 performs the determination process based on the matching degree between the first variation related to face orientations and the second variation related to line-of-sight directions has been described. However, the operation determination unit 16 may perform the determination process as to whether or not to permit a subject to operate the vehicle 1 based on a variation of at least one of the face orientation and the line-of-sight direction in time series. For example, when the determination process is performed by focusing only on the variation of line-of-sight directions (otherwise, face orientations) in time series, there is an advantage that the determination process can be performed more simply than when two types of variations are considered.

Although the case where the authentication process is performed by using a face image of a subject has been described in the above example embodiments, the biometric information used in this disclosure is not limited to only the face image. For example, the in-vehicle system 10 (the authentication unit 12) may perform an authentication process by using another biometric information such as an iris image, an auricle image, or the like instead of the face image. Further, the in-vehicle system 10 may perform an authentication process based on a combination of different types of biometric information.

In the above example embodiments, the case where the authentication unit 12 performs a process before the process is performed by the operation determination unit 16 has been described. However, the authentication process of the authentication unit 12 may be performed after the process is performed by the operation determination unit 16. That is, the authentication unit 12 may perform the authentication process on a subject who is permitted to operate the vehicle 1 by the operation determination unit 16. In such a case, it is possible to narrow down the number of subjects to be subjected to an authentication process.

Similarly, the authentication process of the authentication unit 12 and the determination process of the operation determination unit 16 may be performed in parallel. In such a case, there is an advantage that the processing speed is higher than in the case where the authentication process and the determination process are performed in series.

In the above example embodiments, the case where, in response to receiving a signal from a transmitter carried by a subject, the subject is deemed as approaching the vehicle 1 and the camera 2 is then activated has been described. However, the activation condition of the camera 2 is not limited thereto. For example, a human detection sensor may be separately provided on the vehicle 1 side, and the camera 2 may be activated based on a detection signal from the human detection sensor. Also in such a case, since the operation time of the camera 2 can be reduced, an advantageous effect of saved power consumption is achieved.

The device that can be controlled based on a determination result from the operation determination unit 16 is not limited to only the vehicle 1. The device can be applied to login control on a personal computer, a smartphone, or the like, locking control on a door apparatus provided to a building, or the like. For example, once a subject presses a button of an intercom equipped with a camera installed at an entrance of a building, the camera captures an image of the subject. Accordingly, a control device connected to the intercom can perform a determination process and an authentication process based on the image captured by the camera and unlock the door if the subject is registered in advance as a resident of the building. In addition, this disclosure targets various tools other than the vehicle 1, such as a drone, a communication robot, a robot cleaner, and the like.

In the above example embodiments, the case where all the processes of the direction determination process, the authentication process, and the determination process are performed at the in-vehicle system 10 of the vehicle 1 has been described. However, some or all of the direction determination process, the authentication process, and the determination process may be performed at a server computer connected to the in-vehicle system 10 via wireless communication. In such a case, the in-vehicle system 10 can transmit an image captured by the camera 2 of the vehicle 1 to the server computer and control the vehicle 1 based on a process result received from the server computer side. The use of the server computer that is superior in processing performance achieves an advantageous effect that the processing speed can be increased.

Although the case where the camera 2 is a camera facing outward to capture outside of the vehicle 1 has been described in the above example embodiments, the same applies to a case where the camera 2 is a camera facing inward to capture a vehicle interior. When a camera facing inward to capture a vehicle interior is provided, the in-vehicle system 10 can determine whether or not the driver has an intention of operation based on at least one of the face orientation and the line-of-sight direction of the driver in the vehicle interior and perform a process to warn a person seating in the driver's seat, a process to control the traveling speed, or the like. When automated driving is put into practical use, the vehicle 1 may be caused to autonomously travel to come close to a driver in accordance with the driver's intention of operation.

Although the case where a process is performed by using a captured image captured by the camera 2 provided outside the vehicle 1 has been described in the above example embodiments, a captured image captured by another camera may be used. Fig. 13 is an external view illustrating an example of the vehicle structure in a modified example embodiment. Fig. 13 illustrates a case where a captured image captured by a camera 4 of a drive recorder is used. In such a case, the camera 2 dedicated to authentication is not required to be provided to the body of the vehicle 1 in advance. Thus, there are advantages that the manufacturing cost of the vehicle 1 can be reduced, the exterior of the vehicle 1 is not affected, such a camera can be optionally attached even afterwards, and the like.

Further, the camera 4 of the drive recorder may often be provided not only to the front but also to the rear in a vehicle interior. Thus, face authentication and operation determination can be performed at a plurality of positions, and this further improves convenience.

For the camera 2 and the camera 4, infrared cameras may be used instead of visible light cameras, or both of a visible light camera and an infrared camera may be used. When an infrared camera is used, there is an advantage that an image of a subject can be captured even in a dark place or at night. Furthermore, the type of a camera used for capturing may be automatically switched in accordance with a lighting condition outside the vehicle 1 or a time zone of the capturing.

Furthermore, to prevent impersonation using paper or a photograph, the example embodiment may also be configured to request a subject to perform a predetermined action such as moving his/her face as final authentication after an operation determination process.

The scope of each of the example embodiments also includes a processing method that stores, in a storage medium, a program that causes the configuration of each of the example embodiments to operate so as to implement the function of each of the example embodiments described above, reads the program stored in the storage medium as a code, and executes the program in a computer. That is, the scope of each of the example embodiments also includes a computer readable storage medium. Further, each of the example embodiments includes not only the storage medium in which the program described above is stored but also the program itself.

As the storage medium, for example, a floppy (registered trademark) disk, a hard disk, an optical disk, a magneto-optical disk, a CD-ROM, a magnetic tape, a nonvolatile memory card, or the like can be used. Further, the scope of each of the example embodiments also includes an example that operates on OS to perform a process in cooperation with another software or a function of an add-in board without being limited to an example that performs a process by an individual program stored in the storage medium.

The whole or part of the example embodiments disclosed above can be described as, but not limited to, the following supplementary notes.

(Supplementary note 1)

An information processing device comprising:

a direction determination unit that determines at least one of a face orientation and a line-of-sight direction of a subject included in an image captured by a camera; and
a determination unit that, based on a variation of at least one of the face orientation and the line-of-sight direction in time series, performs a determination process as to whether or not to permit the subject to operate an operation object.

(Supplementary note 2)

The information processing device according to supplementary note 1, wherein the determination unit performs the determination process based on a matching degree between a first variation related to the face orientation and a second variation related to the line-of-sight direction.

(Supplementary note 3)

The information processing device according to supplementary note 2, wherein the determination unit permits an operation of the operation object when a difference between the first variation and the second variation occurring within a predetermined period is less than or equal to a threshold set in advance.

(Supplementary note 4)

The information processing device according to supplementary note 1, wherein the determination unit permits an operation of the operation object when a correlation between the face orientation and the line-of-sight direction occurring within a predetermined period is greater than or equal to a threshold set in advance.

(Supplementary note 5)

The information processing device according to supplementary note 3 or 4, wherein the determination unit performs the determination process when the line-of-sight direction is less than or equal to a further threshold set in advance.

(Supplementary note 6)

The information processing device according to any one of supplementary notes 3 to 5, wherein the threshold is set in advance in accordance with the subject.

(Supplementary note 7)

The information processing device according to supplementary note 5, wherein the further threshold is set in advance in accordance with the subject.

(Supplementary note 8)

The information processing device according to any one of supplementary notes 1 to 7 further comprising a control unit that controls the operation object based on a determination result of the determination process.

(Supplementary note 9)

The information processing device according to supplementary note 8 further comprising an authentication unit that performs an authentication process on the subject through face matching between a face image of the subject acquired from the image and a registered face image of a registrant,
wherein the control unit controls the operation object based on an authentication result of the authentication process and the determination result of the determination process.

(Supplementary note 10)

The information processing device according to supplementary note 9, wherein the determination unit performs the determination process on the subject authenticated as the registrant by the authentication unit.

(Supplementary note 11)

The information processing device according to supplementary note 9, wherein the authentication unit performs the authentication process on the subject permitted for the operation by the determination unit.

(Supplementary note 12)

The information processing device according to supplementary note 9, wherein the authentication process and the determination process are performed in parallel.

(Supplementary note 13)

The information processing device according to any one of supplementary notes 8 to 12, wherein based on a signal from a transmitter carried by the subject, the control unit starts a capturing process performed by the camera.

(Supplementary note 14)

The information processing device according to any one of supplementary notes 8 to 12, wherein based on a detection signal from a human detection sensor provided to the operation object, the control unit starts a capturing process performed by the camera.

(Supplementary note 15)

The information processing device according to any one of supplementary notes 8 to 14, wherein based on the determination result, the control unit controls a lock state of a door apparatus provided to the operation object.

(Supplementary note 16)

The information processing device according to any one of supplementary notes 8 to 15, wherein based on execution status or the determination result of the determination process, the control unit controls a light emission state of a light emitting device provided to the operation object.

(Supplementary note 17)

The information processing device according to any one of supplementary notes 1 to 16 further comprising a distance measurement unit that measures a distance from the operation object to the subject based on the image, wherein the determination unit performs the determination process on the subject present at the distance less than or equal to a predetermined distance.

(Supplementary note 18)

The information processing device according to any one of supplementary notes 9 to 12 further comprising a distance measurement unit that measures a distance from the operation object to the subject based on the image, wherein the authentication unit performs the authentication process on the subject present at the distance less than or equal to a predetermined distance.

(Supplementary note 19)

The information processing device according to supplementary note 17 or 18, wherein the distance measurement unit measures the distance based on a distance between eyes of the subject in the image.

(Supplementary note 20)

The information processing device according to supplementary note 17 or 18, wherein the distance measurement unit measures the distance based on a size of a region of a face or a head of the subject in the image.

(Supplementary note 21)

The information processing device according to any one of supplementary notes 1 to 20, wherein the operation object is a vehicle.

(Supplementary note 22)

An information processing method comprising:

determining at least one of a face orientation and a line-of-sight direction of a subject included in an image captured by a camera; and
based on a variation of at least one of the face orientation and the line-of-sight direction in time series, performing a determination process as to whether or not to permit the subject to operate an operation object.

(Supplementary note 23)

A storage medium storing a program that causes a computer to perform:

determining at least one of a face orientation and a line-of-sight direction of a subject included in an image captured by a camera; and
based on a variation of at least one of the face orientation and the line-of-sight direction in time series, performing a determination process as to whether or not to permit the subject to operate an operation object.

[Reference Signs List]

1 vehicle
2, 4 camera
3 LED
10 in-vehicle system
11 image acquisition unit
12 authentication unit
13 authentication information storage unit
14 face orientation determination unit
15 line-of-sight direction determination unit
16 operation determination unit
17 control unit
18 authentication information registration unit
19 distance measurement unit
100 information processing device
100A direction determination unit
100B determination unit

**Claims**

1. An information processing device comprising:

a direction determination unit that determines at least one of a face orientation and a line-of-sight direction of a subject included in an image captured by a camera; and
a determination unit that, based on a variation of at least one of the face orientation and the line-of-sight direction in time series, performs a determination process as to whether or not to permit the subject to operate an operation object.

2. The information processing device according to claim 1, wherein the determination unit performs the determination process based on a matching degree between a first variation related to the face orientation and a second variation related to the line-of-sight direction.

3. The information processing device according to claim 2, wherein the determination unit permits an operation of the operation object when a difference between the first variation and the second variation occurring within a predetermined period is less than or equal to a threshold set in advance.

4. The information processing device according to claim 1, wherein the determination unit permits an operation of the operation object when a correlation between the face orientation and the line-of-sight direction occurring within a predetermined period is greater than or equal to a threshold set in advance.

5. The information processing device according to claim 3 or 4, wherein the determination unit performs the determination process when the line-of-sight direction is less than or equal to a further threshold set in advance.

6. The information processing device according to any one of claims 3 to 5, wherein the threshold is set in advance in accordance with the subject.

7. The information processing device according to claim 5, wherein the further threshold is set in advance in accordance with the subject.

8. The information processing device according to any one of claims 1 to 7 further comprising a control unit that controls the operation object based on a determination result of the determination process.

9. The information processing device according to claim 8 further comprising an authentication unit that performs an authentication process on the subject through face matching between a face image of the subject acquired from the image and a registered face image of a registrant,
   wherein the control unit controls the operation object based on an authentication result of the authentication process and the determination result of the determination process.

10. The information processing device according to claim 9, wherein the determination unit performs the determination process on the subject authenticated as the registrant by the authentication unit.

11. The information processing device according to claim 9, wherein the authentication unit performs the authentication process on the subject permitted for the operation by the determination unit.

12. The information processing device according to claim 9, wherein the authentication process and the determination process are performed in parallel.

13. The information processing device according to any one of claims 8 to 12, wherein based on a signal from a transmitter carried by the subject, the control unit starts a capturing process performed by the camera.

14. The information processing device according to any one of claims 8 to 12, wherein based on a detection signal from a human detection sensor provided to the operation object, the control unit starts a capturing process performed by the camera.

15. The information processing device according to any one of claims 8 to 14, wherein based on the determination result, the control unit controls a lock state of a door apparatus provided to the operation object.

16. The information processing device according to any one of claims 8 to 15, wherein based on execution status or the determination result of the determination process, the control unit controls a light emission state of a light emitting device provided to the operation object.

17. The information processing device according to any one of claims 1 to 16 further comprising a distance measurement unit that measures a distance from the operation object to the subject based on the image, wherein the determination unit performs the determination process on the subject present at the distance less than or equal to a predetermined distance.

18. The information processing device according to any one of claims 9 to 12 further comprising a distance measurement unit that measures a distance from the operation object to the subject based on the image,
   wherein the authentication unit performs the authentication process on the subject present at the distance less than or equal to a predetermined distance.

19. The information processing device according to claim 17 or 18, wherein the distance measurement unit measures the distance based on a distance between eyes of the subject in the image.

20. The information processing device according to claim 17 or 18, wherein the distance measurement unit measures the distance based on a size of a region of a face or a head of the subject in the image.

21. The information processing device according to any one of claims 1 to 20, wherein the operation object is a vehicle.

22. An information processing method comprising:

determining at least one of a face orientation and a line-of-sight direction of a subject included in an image captured by a camera; and
based on a variation of at least one of the face orientation and the line-of-sight direction in time series, performing a determination process as to whether or not to permit the subject to operate an operation object.

23. A storage medium storing a program that causes a computer to perform:

determining at least one of a face orientation and a line-of-sight direction of a subject included in an image captured by a camera; and
based on a variation of at least one of the face orientation and the line-of-sight direction in time series, performing a determination process as to whether or not to permit the subject to operate an operation object.

**Amended claims under Art. 19.1 PCT**

1. (Amended) An information processing device comprising:

a face orientation determination means for determining a face orientation of a subject;
a line-of-sight direction determination means for determining a line-of-sight direction of the subject; and
an operation determination means for calculating a first variation related to the face orientation of the subject in time series and a second variation related to the line-of-sight direction of the subject in time series and, based on a matching degree between the first variation and the second variation, determines whether or not the subject has an intention of operating an operation object.

2. (Amended) The information processing device according to claim 1, wherein in accordance with a size of one of the first variation and the second variation, the operation determination means variably determines a range to tolerate the other.

3. (Amended) The information processing device according to claim 1 or 2, wherein when a difference between the first variation and the second variation in time series is within a threshold, the operation determination means determines that the subject is an operator.

4. (Amended)The information processing device according to claim 3 further comprising an authentication information registration means for calculating the threshold based on time-series registration images in which the subject is captured.

5. (Amended) The information processing device according to claim 3 or 4, wherein the threshold is set in advance in accordance with the subject.

6. (Amended) The information processing device according to any one of claims 1 to 5 further comprising a control means for controlling the operation object based on a determination result from the operation determination means.

7. (Amended) The information processing device according to claim 6 further comprising an authentication means for performing an authentication process on the subject by face matching between a face image of the subject and a registered face image of a registrant,
wherein the control means controls the operation object based on an authentication result from the authentication means and the determination result from the operation determination means.

8. (Amended) The information processing device according to claim 7, wherein the operation determination means performs a determination process on the subject authenticated as the registrant by the authentication means.

9.  (Amended) The information processing device according to claim 8, wherein the authentication process and the determination process are performed in parallel.

10. (Amended) The information processing device according to any one of claims 6 to 9, wherein based on a signal from a transmitter carried by the subject, the control means starts a capturing process performed by a camera.

11. (Amended) The information processing device according to any one of claims 6 to 9, wherein based on a detection signal from a human detection sensor provided to the operation object, the control means starts a capturing process performed by the camera.

12. (Amended) The information processing device according to any one of claims 6 to 11, wherein based on the determination result from the operation determination means, the control means controls a lock state of a door apparatus provided to the operation object.

13. (Amended) The information processing device according to any one of claims 6 to 12, wherein based on execution status and the determination result of a process performed by the operation determination means, the control means controls a light emission state of a light emitting device provided to the operation object.

14. (Amended) The information processing device according to any one of claims 1 to 13 further comprising a distance measurement means for measuring a distance from the operation object to the subject based on an image in which the subject is captured,
wherein the operation determination means determines whether or not the subject present at the distance that is less than or equal to a predetermined distance has the intention.

15. (Amended) The information processing device according to claim 7 further comprising a distance measurement means for measuring a distance from the operation object to the subject based on an image in which the subject is captured,
wherein the authentication means performs the authentication process on the subject present at the distance that is less than or equal to a predetermined distance.

16. (Amended) The information processing device according to claim 14 or 15, wherein the distance measurement means measures the distance based on a distance between eyes of the subject in the image in which the subject is captured.

17. (Amended) The information processing device according to claim 14 or 15, wherein the distance measurement means measures the distance based on a size of a region of a face or a head of the subject in the image.

18. (Amended) The information processing device according to any one of claims 1 to 17, wherein the operation object is a vehicle.

19. (Amended) An information processing device comprising:

    a face orientation determination means for determining a face orientation of a subject;
    a line-of-sight direction determination means for determining a line-of-sight direction of the subject; and
    a control means for calculating a first variation related to the face orientation of the subject in time series and a second variation related to the line-of-sight direction of the subject in time series and controls an operation object based on a matching degree between the first variation and the second variation.

20. (Amended) The information processing device according to claim 19 further comprising a distance measurement means for measuring a distance from the operation object to the subject,
wherein when the distance is within a predetermined value, the face orientation determination means determines a face orientation of the subject, and the line-of-sight direction determination means determines a line-of-sight direction of the subject.

21. (Amended) The information processing device according to claim 19 or 20 further comprising an authentication means for performing an authentication process on the subject by face matching between a face image in which the subject is captured and a registered face image of a registrant,
wherein the control means controls the operation object based on an authentication result from the authentication means.

22. (Amended) The information processing device according to claim 20, wherein the distance measurement means measures the distance based on a distance between eyes of the subject in the image in which the subject is captured.

23. (Amended) The information processing device according to claim 20, wherein the distance measurement means measures the distance based on a size of a region of a face or a head of the subject in the image in which the subject is captured.

24. (New) The information processing device according to any one of claims 19 to 23, wherein the operation object is a vehicle.

25. (New) An information processing method comprising:

determining a face orientation of a subject;
determining a line-of-sight direction of the subject; and
calculating a first variation related to the face orientation of the subject in time series and a second variation related to the line-of-sight direction of the subject in time series and, based on a matching degree between the first variation and the second variation, determining whether or not the subject has an intention of operating an operation object.

26. (New) A storage medium storing a program that causes a computer to perform:

determining a face orientation of a subject;
determining a line-of-sight direction of the subject; and
calculating a first variation related to the face orientation of the subject in time series and a second variation related to the line-of-sight direction of the subject in time series and, based on a matching degree between the first variation and the second variation, determining whether or not the subject has an intention of operating an operation object.

27. (New) An information processing method comprising:

determining a face orientation of a subject;
determining a line-of-sight direction of the subject; and
calculating a first variation related to the face orientation of the subject in time series and a second variation related to the line-of-sight direction of the subject in time series and controlling an operation object based on a matching degree between the first variation and the second variation.

28. (New) A storage medium storing a program that causes a computer to perform steps of:

determining a face orientation of a subject;
determining a line-of-sight direction of the subject; and
calculating a first variation related to the face orientation of the subject in time series and a second variation related to the line-of-sight direction of the subject in time series and controlling an operation object based on a matching degree between the first variation and the second variation.

# FIG. 1

# FIG. 2

IN-VEHICLE SYSTEM — 10

| | | |
|---|---|---|
| IMAGE ACQUISITION UNIT — 11 | AUTHENTICATION UNIT — 12 | AUTHENTICATION INFORMATION STORAGE UNIT — 13 |
| FACE ORIENTATION DETERMINATION UNIT — 14 | LINE-OF-SIGHT DIRECTION DETERMINATION UNIT — 15 | OPERATION DETERMINATION UNIT — 16 |
| CONTROL UNIT — 17 | AUTHENTICATION INFORMATION REGISTRATION UNIT — 18 | |

# FIG. 3

| FACE IMAGE | REGISTRATION DATE AND TIME | USER CATEGORY | THRESHOLD | OPERATION AUTHORITY |
|---|---|---|---|---|
| | 2020/1/18 hh:mm | VEHICLE OWNER | [THRESHOLD A] | Lv3 |
| | 2020/1/18 hh:mm | FAMILY | [THRESHOLD B] | Lv2 |
| | 2020/2/15 hh:mm | GUEST | [THRESHOLD C] | Lv1 |
| | 2020/2/15 hh:mm | GUEST | [THRESHOLD D] | Lv1 |

# FIG. 4

# FIG. 5

```
            ┌──────────────┐
            │    START     │
            └──────┬───────┘
                   │
   ┌───────────────▼──────────────────────────┐
   │  ACQUIRE CAPTURED IMAGE OUTSIDE VEHICLE   │──── S101
   └───────────────┬──────────────────────────┘
                   │
         NO    ◇───▼──────────────────◇  S102
   ◄──────────   PERSON'S FACE DETECTED?
                 ◇──────────┬─────────◇
                            │ YES
           ┌────────────────▼─────────────┐
           │      ACQUIRE FACE IMAGE       │──── S103
           └────────────────┬─────────────┘
           ┌────────────────▼─────────────┐
           │  CALCULATE FACE FEATURE AMOUNT │──── S104
           └────────────────┬─────────────┘
           ┌────────────────▼─────────────┐
           │      FACE AUTHENTICATION      │──── S105
           └────────────────┬─────────────┘
                            │
         NO    ◇───────────▼──────────────◇  S106
   ◄──────────   AUTHENTICATION SUCCESSFUL?
                 ◇──────────┬─────────────◇
                            │ YES
```

- ACQUIRE CAPTURED IMAGE OUTSIDE VEHICLE — S101
- PERSON'S FACE DETECTED? — S102 (NO) / YES
- ACQUIRE FACE IMAGE — S103
- CALCULATE FACE FEATURE AMOUNT — S104
- FACE AUTHENTICATION — S105
- AUTHENTICATION SUCCESSFUL? — S106 (NO) / YES
- CALCULATE FACE ORIENTATION AND LINE-OF-SIGHT DIRECTION — S107
- FACE ORIENTATION AND LINE-OF-SIGHT DIRECTION WITHIN THRESHOLD? — S108 (NO) / YES
- ACCUMULATE FACE ORIENTATION AND LINE-OF-SIGHT DIRECTION PER UNIT TIME — S109
- CALCULATE EACH VARIATION OF FACE ORIENTATIONS AND LINE-OF-SIGHT DIRECTIONS — S110
- CALCULATE MATCHING DEGREE BETWEEN VARIATIONS OF FACE ORIENTATIONS AND LINE-OF-SIGHT DIRECTIONS — S111
- MATCHING DEGREE WITHIN THRESHOLD? — S112 (NO) / YES
- OPERATE VEHICLE — S113
- END

# FIG. 6

# FIG. 7

# FIG. 8

```
        ┌─────────────┐
        │    START    │
        └──────┬──────┘
               │
    ┌──────────▼
    │          ◇ ─── S201
    │         ╱ ╲
    │        ╱   ╲
 NO │   ◇ RADIO  ◇
    │     WAVE OF SMART KEY
    │        RECEIVED?
    │        ╲   ╱
    │         ╲ ╱
    │          │ YES
    │   ┌──────▼──────────┐
    │   │ ACTIVATE CAMERA │ ─── S202
    │   └──────┬──────────┘
               │
        ┌──────▼──────┐
        │     END     │
        └─────────────┘
```

# FIG. 9

10

IN-VEHICLE SYSTEM

11

IMAGE ACQUISITION
UNIT

12

AUTHENTICATION
UNIT

13

AUTHENTICATION
INFORMATION
STORAGE UNIT

14

FACE ORIENTATION
DETERMINATION
UNIT

15

LINE-OF-SIGHT
DIRECTION
DETERMINATION UNIT

16

OPERATION
DETERMINATION
UNIT

17

CONTROL UNIT

18

AUTHENTICATION
INFORMATION
REGISTRATION UNIT

19

DISTANCE
MEASUREMENT
UNIT

# FIG. 10

S103

| CALCULATE DISTANCE BETWEEN EYES | ~S301 |

| MEASURE DISTANCE FROM VEHICLE TO SUBJECT | ~S302 |

~S303

PRESENT WITHIN PREDETERMINED DISTANCE?

NO

YES

S104

S101

# FIG. 11

S103

CALCULATE SIZE OF FACE REGION —S401

MEASURE DISTANCE FROM VEHICLE TO SUBJECT —S402

—S403

PRESENT WITHIN PREDETERMINED DISTANCE?

NO

YES

S104

S101

# FIG. 12

INFORMATION PROCESSING DEVICE — 100

DIRECTION DETERMINATION UNIT — 100A

DETERMINATION UNIT — 100B

FIG. 13

## INTERNATIONAL SEARCH REPORT

| International application No. |
| --- |
| PCT/JP2020/003266 |

A.   CLASSIFICATION OF SUBJECT MATTER
G06F 3/01(2006.01)i
FI: G06F3/01 510
According to International Patent Classification (IPC) or to both national classification and IPC

B.   FIELDS SEARCHED

Minimum documentation searched (classification system followed by classification symbols)
G06F3/01

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2007-310620 A (SONY CORP.) 29.11.2007 (2007-11-29) paragraphs [0117]-[0159], fig. 6-12 paragraphs [0117]-[0159], fig. 6-12 | 1-12, 22-23<br>13-21 |
| Y | WO 2019/181143 A1 (MITSUBISHI MOTORS CORPORATION) 26.09.2019 (2019-09-26) paragraphs [0025]-[0037], fig. 1-2 | 13-21 |
| A | JP 2017-533609 A (TOYOTA MOTOR SALES, U.S.A., INC.) 09.11.2017 (2017-11-09) entire text, all drawings | 1-23 |

☐  Further documents are listed in the continuation of Box C.      ☒  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 March 2020 (16.03.2020) | 24 March 2020 (24.03.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

INTERNATIONAL SEARCH REPORT

Information on patent family members

International application no.

PCT/JP2020/003266

| Patent Documents referred in the Report | Publication Date | Patent Family | Publication Date |
|---|---|---|---|
| JP 2007-310620 A | 29 Nov. 2007 | US 2007/0276690 A1 paragraphs [0136]-[0178], fig. 6-12 CN 101076107 A KR 10-2007-0111999 A | |
| WO 2019/181143 A1 | 26 Sep. 2019 | (Family: none) | |
| JP 2017-533609 A | 09 Nov. 2017 | US 2015/0077235 A1 entire text, all drawings CN 105556246 A KR 10-2016-0057458 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007105792 A